# EUROPÄISCHE PATENTSCHRIFT

(11) **EP 0 941 423 B1**
(45) Veröffentlichungstag und Bekanntmachung des Hinweises auf die Patenterteilung: **09.10.2002**
(21) Anmeldenummer: 97954348.5
(22) Anmeldetag: 01.12.1997
(51) Int. Cl.: F16D 69/04

(54) **VERFAHREN ZUM REGENERIEREN VON BREMSBELÄGEN**
METHOD FOR REGENERATING BRAKE LININGS
PROCEDE DE REGENERATION DE GARNITURES DE FREIN

(30) Priorität: 03.12.1996 DE 19650026
(43) Veröffentlichungstag der Anmeldung: 15.09.1999
(73) Patentinhaber: TMD Friction EsCo GmbH, 45356 Essen (DE)
(72) Erfinder: BAUMEISTER, Bernhard, D-32791 Lage (DE)
(74) Vertreter: Schmidt, Frank-Michael, Dr.-Ing.
(86) Internationale Anmeldenummer: EP9706731
(87) Internationale Veröffentlichungsnummer: WO98025047

(56) Entgegenhaltungen:
- EP-A- 0 552 427
- DE-A- 2 542 692
- FR-A- 2 711 089
- GB-A- 2 085 098
- GB-A- 2 245 667
- US-A- 5 384 991

## Beschreibung

Die Erfindung betrifft ein Verfahren zum Regenerieren von Bremsbelägen, insbesondere von Eisenbahnbelägen.

Bremsbeläge weisen einen auf einem Belagträger aufgebrachten Reibbelag auf. Die Reibbelagschicht wird aufgrund der Reibbeanspruchung beim Bremsen abgenutzt, so daß ein Austausch des verbrauchten Bremsbelags erforderlich wird. Üblicherweise werden Bremsbeläge bereits ausgetauscht, bevor die Reibbelagschicht an der am stärksten abgenutzten Stelle vollständig entfernt ist. Aus Sicherheitsgründen werden Bremsbeläge in der Regel erheblich vor dem vollständigen Verschleiß ausgetauscht. Beispielsweise werden Eisenbahnbeläge üblicherweise dann ausgetauscht, wenn deren Reibbelagschicht zu etwa 50 % verbraucht ist.

Obwohl somit ein großer Teil der Reibbelagschicht ungenutzt bleibt, werden die verbrauchten Bremsbeläge einer stofflichen Verwertung zugeführt.

Aufgabe der Erfindung ist es, ein Verfahren zum Regenerieren von Bremsbelägen, insbesondere von Eisenbahnbelägen, zu schaffen, das eine wirtschaftlichere Verwertung der verbrauchten Bremsbeläge gestattet.

Diese Aufgabe wird erfindungsgemäß durch ein Verfahren zum Regenerieren von Bremsbelägen, insbesondere von Eisenbahnbelägen, gelöst, bei dem eine Reibbelagschicht von ihrer abgenutzten Oberfläche her spanend bearbeitet und mit einem dreidimensionalen Oberflächenprofil versehen wird, die profilierte Oberfläche mit einem Bindemittel beschichtet wird, und danach eine frische Reibbelagmasse aufgepreßt wird.

Dieses Verfahren hat gegenüber den bekannten Verfahren den Vorteil, daß ein wesentlich größerer Anteil des nicht abgeriebenen Rest-Reibbelags für den regenerierten Bremsbelag wiederverwendet werden kann. Ein möglicherweise auftretender Schrägverschleiß, d.h. eine ungleichmäßige Abnutzung der alten Reibbelagschicht, wird durch das erfindungsgemäße Regenerierverfahren vollständig ausgeglichen. Darüber hinaus können die durch das Abschleifen oder Abfräsen der Oberfläche des Reibbelags entstehenden Stäube oder Späne einer Weiterverwendung, beispielsweise für den Straßenbau, zugeführt werden.

Das dreidimensionale Oberflächenprofil schafft einen verzahnten Übergang zwischen der alten und der neu aufgepreßten Reibbelagmasse. Der so ausgebildete Belag kann über die neu aufgebrachte Reibbelagmassenschicht hinaus abgerieben werden, wodurch eine Nutzung der gesamten neuen Belagdicke ermöglicht wird. In keinem Stadium des Abriebs wird eine zum großen Teil aus Bindemittel bestehende Oberflächenschicht zum Bremsen benutzt.

Bei einer Weiterbildung des erfindungsgemäßen Verfahrens wird die abgenutzte Oberfläche durch Profil-Schleifen oder Profil-Fräsen derart bearbeitet, daß eine profilierte Oberfläche mit einem senkrecht zur Oberfläche zahnförmigen, trapezförmigen oder mäanderförmigen Profil erzeugt wird, wobei sich das Profil zumindest abschnittsweise in einer ersten Richtung auf der Oberfläche erstreckt. Bei einer anderen Ausführungsform wird die abgenutzte Oberfläche durch Grobschleifen derart bearbeitet, daß eine unregelmäßige Oberflächenstruktur mit im wesentlichen länglichen Vertiefungen erzeugt wird, wobei die eingebrachten Vertiefungen sich zumindest abschnittsweise im wesentlichen in einer erster Richtung erstrecken. Diese spanende Bearbeitung wird bei einer weiteren Ausführungsform des erfindungsgemäßen Verfahrens nacheinander in zwei sich kreuzenden Richtungen ausgeführt. Bei den genannten Weiterbildungen des erfindungsgemäßen Verfahrens wird eine Oberflächenstruktur erzeugt, die eine große Oberfläche bildet und in die der danach aufgepreßte frische Reibbelag eingreift, so daß ein Abscheren des frischen Belags vermieden wird. Die Auswahl zwischen den genannten Oberflächenstrukturen bzw. Profilen erfolgt in Abhängigkeit von dem gewählten Spanverfahren, insbesondere den dabei verwendeten Werkzeugen, und dem gewünschten Einsatzgebiet der regenerierten Bremsbeläge.

Eine vorteilhafte Weiterbildung der Erfindung ist dadurch gekennzeichnet, daß die Profiltiefe der Oberflächenstruktur im Bereich von etwa 1 bis 30 mm, vorzugsweise 5 bis 20 mm, liegt. Die Profiltiefe der Oberflächenstruktur wird so ausgewählt, daß eine minimale Abschergefahr und eine gute Verbindung zwischen dem Alt-Reibbelag und der neu aufgebrachten Reibbelagmasse entsteht. Andererseits wird die Profiltiefe so gewählt, daß ein möglichst großer Anteil der Alt-Reibbelagmasse weiterverwendet werden kann, d.h. daß ein möglichst geringer Anteil durch das Schleifen abgetragen wird.

Wenn die neue Reibbelagschicht über den Übergang zwischen neuer und alter Reibbelagmasse hinaus abgenutzt wird, kommt es aufgrund der Tiefe des Profils niemals dazu, daß die Oberfläche des Reibbelags einen großen Bindemittelanteil aufweist.

Bei einer bevorzugten Ausführungsform des erfindungsgemäßen Verfahrens wird als erste Richtung eine Richtung quer, vorzugsweise in einem rechten Winkel, zur Richtung der Hauptbeanspruchung des Reibbelags beim Bremsvorgang gewählt. Dadurch wird die Gefahr des Abscherens der neu aufgebrachten Reibbelagmasse von der alten Reibbelagmasse weiter verringert.

Bei einer Weiterbildung dieses Verfahrens wird in mehreren aneinander angrenzenden Abschnitten der Reibbelagsoberfläche die jeweilige erste Richtung geändert. Durch diese Maßnahme werden sowohl die Haftung als auch die Abscherfestigkeit der aufgebrachten Reibbelagmasse weiter verbessert.

Eine Weiterbildung der Erfindung ist dadurch gekennzeichnet, daß eine auf einem Blechstreifen aufgebrachte abgenutzte Reibbelagschicht bis auf eine vorgegebene Restdicke derart abgetragen wird, daß das Blech mit der verbleibenden Reibbelagschicht eine mechanisch ausreichend stabile Struktur für die weiteren Verfahrensschritte bildet. Dieses Ausführungsbeispiel findet insbesondere bei Eisenbahnbelägen oder anderen großen Belägen mit relativ dünnen Trägerblechen Anwendung. Dabei dienen das dünne Blech in Verbindung mit einem ausreichend dicken Restbelag als Träger für den regenerierten Bremsbelag. Insbesondere bei diesen Bremsbelägen, bei denen der Belagträger ein dünnes Blech ist und bei denen somit die Reibbelagmasse zusätzlich zur mechanischen Stabilisierung der Struktur dient, werden die Bremsbeläge zu einem relativ frühen Zeitpunkt ausgewechselt, zu dem der Rest-Reibbelag noch ausreichend dick ist, um die Struktur zu stabilisieren. Bei diesem Anwendungsfall werden durch das erfindungsgemäße Verfahren etwa 30 bis 60 % der Reibbelagmasse eingespart.

Vorzugsweise wird bei dem erfindungsgemäßen Verfahren als Bindemittel ein phenolharz- oder kautschukhaltiger Stoff verwendet.

Vorteilhafte Weiterbildungen der Erfindung sind in den Unteransprüchen gekennzeichnet.

Im folgenden wird die Erfindung anhand von in der Zeichnung dargestellten Ausführungsbeispielen näher beschrieben. In der Zeichnung zeigen:
- Fig. 1: eine Draufsicht auf.einen nach einem ersten Ausführungsbeispiel des erfindungsgemäßen Regenerierungsverfahrens bearbeiteten Bremsbelag, wobei der Bremsbelag nach Abschluß der spanenden Bearbeitung dargestellt ist;
- Fig. 2A: eine schematische Schnittdarstellung durch den in Fig. 1 dargestellten Bremsbelag;
- Fig. 2B: eine schematische Schnittdarstellung durch den Bremsbelag gemäß Fig. 2A nach dem Aufpressen der frischen Reibbelagmasse;
- Fig. 3: eine Draufsicht auf einen nach einem alternativen Ausführungsbeispiel des erfindungsgemäßen Verfahrens bearbeiteten Bremsbelag, wobei der Bremsbelag nach Abschluß der spanenden Bearbeitung dargestellt ist;
- Fig. 4A: eine schematische Schnittdarstellung durch den Bremsbelag gemäß Fig. 3; und
- Fig. 4B: eine Schnittdarstellung durch den Bremsbelag gemäß Fig. 3 nach Aufpressen der frischen Reibbelagmasse.

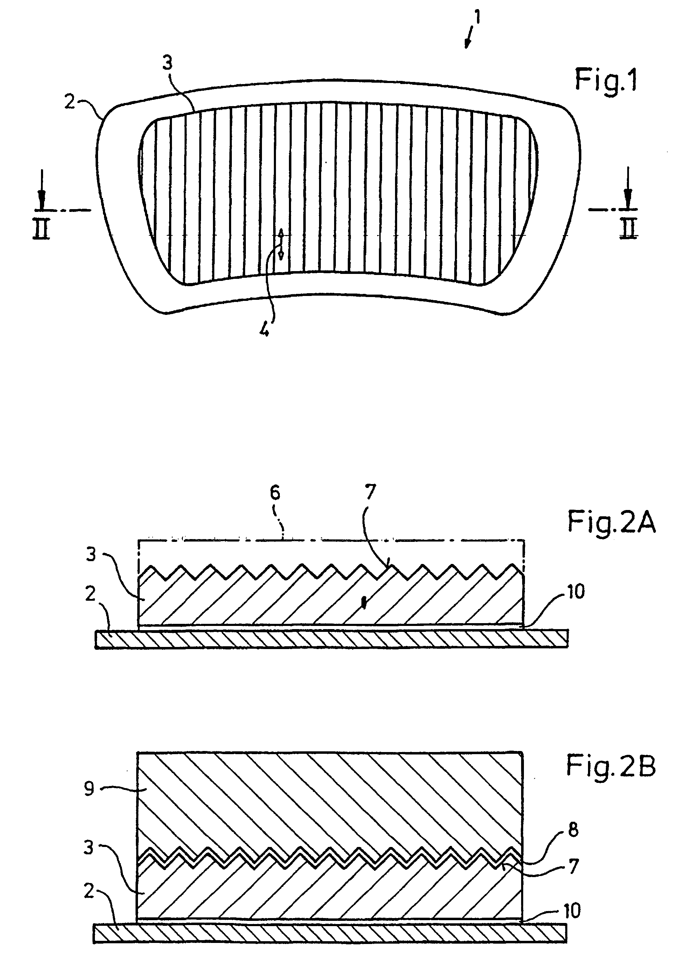

Der in Fig. 1 dargestellte Bremsbelag 1 weist eine auf einem Belagträger 2 aufgebrachte Reibbelagschicht 3 auf. Zum Regenerieren des Bremsbelags wird die Reibbelagschicht 3 von ihrer abgenutzten Oberfläche her spanend bearbeitet und mit einem dreidimensionalen Oberflächenprofil versehen. Das spanend erzeugte Oberflächenprofil der Reibbelagschicht 3 erstreckt sich bei dem gezeigten Bremsbelag in einer ersten Richtung 4.

Fig. 2A ist eine schematisch Schnittdarstellung des in Fig. 1 gezeigten Bremsbelags entlang der Linie II. Die ursprüngliche abgenutzte Reibbelagoberfläche ist durch eine Strich-Punkt-Linie dargestellt. Die abgenutzte Reibbelagschicht 3 ist mittels einer Zwischenschicht 10 mit dem Belagträger 2 fest verbunden.

Bei dem in Fig. 2A dargestellten Ausführungsbeispiel wird mittels der spanenden Bearbeitung ein dreidimensionales zahnförmiges Oberflächenprofil 7 erzeugt. Bei alternativen Ausführungsbeispielen kann dieses Profil sägezahnförmig, trapezförmig oder mäanderförmig sein. Das Profil erstreckt sich vorzugsweise quer zur Hauptbeanspruchungsrichtung während des Bremsvorgangs. Bei einem sägezahnförmigen Profil mit senkrechten und schrägen Profilwänden weisen die senkrechten Profilwände etwa in die Richtung der Kraft, die der Bremsbelag beim Bremsvorgang entgegensetzt. Dies erhöht zusätzlich die Abscherfestigkeit.

Fig. 2B zeigt eine schematische Schnittansicht durch den regenerierten Bremsbelag. Nach Aufbringen einer Bindemitteloder Klebstoffschicht 8 auf die profilierte Oberfläche 7 wurde eine frische Reibbelagmasse 9 aufgepreßt. Die frische Reibbelagmasse wird in einer Dicke aufgepreßt, die mehr als die Hälfte der Gesamtdicke des aus alter Reibbelagschicht 3 und frischer Reibbelagschicht 9 bestehenden Reibbelags einnimmt.

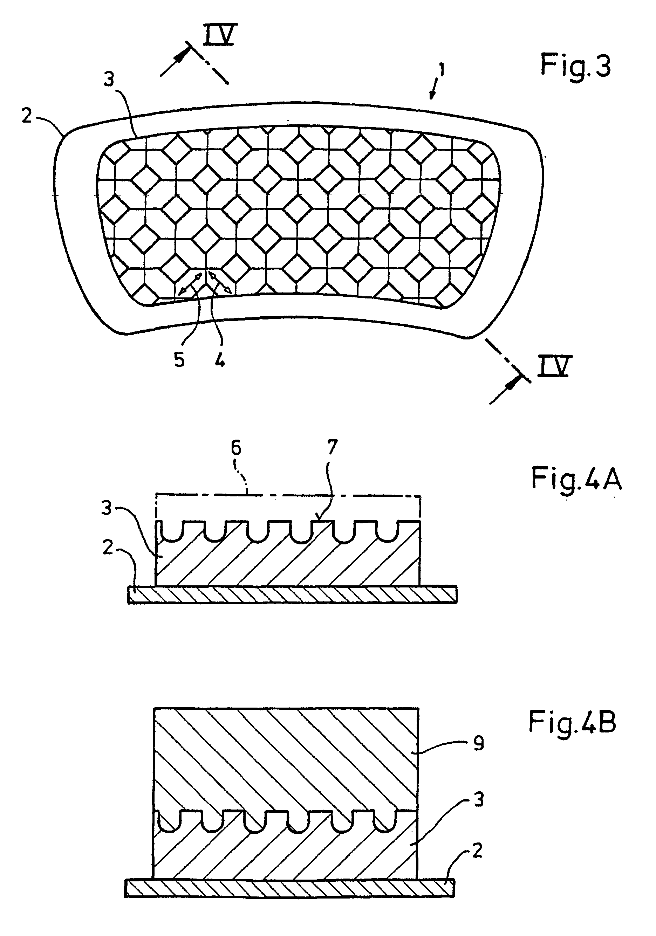

Fig. 3 zeigt die schematische Draufsicht auf einen Bremsbelag, bei dem die Oberfläche der abgenutzten Reibbelagschicht gemäß einem alternativen Ausführungsbeispiel des erfindungsgemäßen Verfahrens mit einem dreidimensionalen Oberflächenprofil versehen wird. Mittels spanender Bearbeitung (Schleifen, Fräsen) wird zunächst ein sich in einer ersten Richtung 4 erstreckendes Profil erzeugt. Anschließend wird das Profil-Schleifen bzw. Profil-Fräsen in einer zweiten Richtung 5 wiederholt, wobei die in Fig. 3 dargestellte Oberflächenstruktur entsteht.

Fig. 4A zeigt eine schematische Schnittdarstellung des in Fig. 3 gezeigten Bremsbelags entlang der Linie II. Bei dieser Schnittansicht ist die in der zweiten Richtung 5 eingebrachte Profilform sichtbar. Das Oberflächenprofil 7 der Reibbelagschicht 3 wird hier dadurch erzeugt, daß zunächst ein Teil der abgenutzten Reibbelagschicht plan abgeschliffen wird und anschließend die dargestellten Vertiefungen mit teilweise senkrechten Seitenwänden eingebracht werden. Das vorangestellte Planschleifen beseitigt die im Laufe des Betriebs möglicherweise entstandene ungleichmäßige Abnutzung (Schrägverschleiß) der Oberfläche der Reibbelagschicht 3. Die schräg verschlissene Oberfläche der alten Reibbelagschicht ist durch eine Strich-Punkt-Linie 6 dargestellt. In Fig. 4A wurde auf die Darstellung der zwischen Reibbelagschicht 3 und Belagträger 2 angeordneten Zwischenschicht verzichtet.

Fig. 4B zeigt die Schnittdarstellung durch den Bremsbelag nach Aufbringen der frischen Reibbelagschicht 9. Die zwischen alter Reibbelagschicht 3 und frischem Reibbelag 9 aufgebrachte Bindemittelschicht ist nicht dargestellt. In der Regel ist sie so dünn, daß sie im Querschnitt im dargestellten Maßstab nicht sichtbar ist.

Bei alternativen Ausführungsformen des erfindungsgemäßen Verfahrens kann die spanende Bearbeitung zum Erzeugen des dreidimensionalen Oberflächenprofils derart modifiziert werden, daß verschiedene Oberflächenbereiche der bearbeiteten Reibbelagschicht mit verschiedenen Oberflächenprofilen versehen werden. Die Oberflächenprofile können in verschiedenen Bereichen oder Abschnitten der Reibbelagschichtoberfläche verschiedene Ausrichtungen aufweisen. Die Auswahl der Oberflächenprofilstruktur erfolgt in Abhängigkeit von der Form und dem Material der Reibbelagschicht, der Art der Aufbringung des Bindemittels, dem Aufpreßverfahren für die frische Reibbelagmasse und den Beanspruchungen beim Einsatz des Bremsbelags.

## Patentansprüche

1. Verfahren zum Regenerieren von Bremsbelägen, insbesondere von Eisenbahnbelägen, wobei
eine Reibbelagschicht (3) von ihrer abgenutzten Oberfläche her spanend bearbeitet und mit einem dreidimensionalen Oberflächenprofil (7) versehen wird,
die profilierte Oberfläche (7) mit einem Bindemittel (8) beschichtet wird, und
danach eine frische Reibbelagmasse (9) aufgepreßt wird.

2. Verfahren nach Anspruch 1, **dadurch gekennzeichnet, daß** die abgenutzte Oberfläche durch Profil-Schleifen oder Profil-Fräsen derart bearbeitet wird, daß eine profilierte Oberflächenstruktur (7) mit einem senkrecht zur Oberfläche zahnförmigen, trapezförmigen oder mäanderförmigen Profil erzeugt wird, wobei sich das Profil zumindest abschnittsweise in einer ersten Richtung (4) auf der Oberfläche erstreckt.

3. Verfahren nach Anspruch 1, **dadurch gekennzeichnet, daß** die abgenutzte Oberfläche durch Grobschleifen derart bearbeitet wird, daß eine unregelmäßige Oberflächenstruktur mit im wesentlichen länglichen Vertiefungen erzeugt wird, wobei die eingebrachten Vertiefungen sich zumindest abschnittsweise im wesentlichen in einer ersten Richtung erstrecken.

4. Verfahren nach Anspruch 2 oder 3, **dadurch gekennzeichnet, daß** die spanende Bearbeitung der abgenutzten Oberfläche in einer zweiten Richtung (5) quer zur ersten Richtung (4) wiederholt wird.

5. Verfahren nach einem der Ansprüche 2 bis 4, **dadurch gekennzeichnet, daß** die Profiltiefe der Oberflächenstruktur im Bereich von etwa 1 bis 30 mm, vorzugsweise 5 bis 20 mm, liegt.

6. Verfahren nach Anspruch 5, **dadurch gekennzeichnet, daß** als erste Richtung (4) eine Richtung quer, vorzugsweise in einem etwa rechten Winkel, zur Richtung der Hauptbeanspruchung des Reibbelags beim Bremsvorgang gewählt wird.

7. Verfahren nach Anspruch 6, **dadurch gekennzeichnet, daß** in mehreren aneinander angrenzenden Abschnitten der profilierten Reibbelagsoberfläche die jeweilige erste Richtung (4) geändert wird.

8. Verfahren nach einem der Ansprüche 1 bis 7, **dadurch gekennzeichnet, daß** eine auf einem Blechstreifen aufgebrachte abgenutzte Reibbelagschicht bis auf eine vorgegebene Restdicke derart spanend bearbeitet wird, daß das Blech mit der verbleibenden Reibbelagschicht eine mechanisch ausreichend stabile Struktur für die weiteren Verfahrensschritte bildet.

9. Verfahren nach einem der Ansprüche 1 bis 8, **dadurch gekennzeichnet, daß** als Bindemittel (8) ein phenolharz- oder kautschukhaltiger Stoff verwendet wird.

## Claims

1. A method of regenerating brake linings, particularly for railway vehicles, wherein
a friction lining layer (3) is machined from its worn surface and provided with a three-dimensional surface profile (7),
the profile surface (7) is coated with a bonding agent (8), and
thereafter a fresh friction lining composition (9) is pressed on.

2. A method as claimed in Claim 1, **characterised in that** the worn surface is machined by profile grinding or profile milling such that a profiled surface structure (7) is produced with a tooth-shaped, trapezoidal or meander-shaped profile perpendicular to the surface, the profile extending, at least in sections, in a first direction (4) on the surface.

3. A method as claimed in Claim 1, **characterised in that** the worn surface is machined by coarse grinding such that an irregular surface structure with substantially elongate recesses is produced, the recesses which are formed extending, at least in sections, substantially in a first direction.

4. A method as claimed in Claim 2 or 3, **characterised in that** the machining of the worn surface is repeated in a second direction (5) transverse to the first direction (4).

5. A method as claimed in one of Claims 2 to 4, **characterised in that** the profile depth of the surface structure is in the region of about 1 to 30 mm, preferably 5 to 20 mm.

6. A method as claimed in Claim 5, **characterised in that** a direction transverse, preferably approximately at right angles, to the direction of the main loading of the friction lining during the braking process is selected as the first direction (4).

7. A method as claimed in Claim 6, **characterised in that** the first direction (4) is altered in a plurality of adjoining sections of the profiled friction lining surface.

8. A method as claimed in one of Claims 1 to 7, **characterised in that** a worn friction lining layer fastened to a metal sheet is machined down to a predetermined residual thickness such that the metal sheet constitutes, together with the remainder of the friction lining layer, a sufficiently mechanically stable structure for the further method steps.

9. A method as claimed in one of Claims 1 to 8, **characterised in that** a substance containing phenol resin or rubber is used as the bonding agent (8).

## Revendications

1. Procédé de régénération de garnitures de frein, en particulier de garnitures de chemin de fer, dans lequel
une couche de garniture de friction (3) est usinée par enlèvement de matière depuis sa surface usée et est pourvue d'un profil de surface tridimensionnel (7),
la surface profilée (7) est revêtue d'un liant (8), et
après cela, une matière de garniture de friction fraîche (9) est appliquée par pression.

2. Procédé selon la revendication 1, **caractérisé par le fait que** la surface usée est usinée par meulage de profil ou fraisage de profil de façon telle que soit produite une structure de surface profilée (7) ayant un profil en forme de dents, trapézoïdal ou en forme de méandres perpendiculairement à la surface, le profil s'étendant au moins par endroits dans une première direction (4) sur la surface.

3. Procédé selon la revendication 1, **caractérisé par le fait que** la surface usée est usinée par meulage grossier de façon telle que soit produite une structure de surface irrégulière à creux en gros allongés, les creux produits s'étendant au moins par endroits en gros dans une première direction.

4. Procédé selon l'une des revendications 2 et 3, **caractérisé par le fait que** l'usinage par enlèvement de matière de la surface usée est répété dans une deuxième direction (5) perpendiculaire à la première (4).

5. Procédé selon l'une des revendications 2 à 4, **caractérisé par le fait que** la profondeur de profil de la structure de surface est d'environ 1 à 30 mm, de préférence de 5 à 20 mm.

6. Procédé selon la revendication 5, **caractérisé par le fait que** comme première direction (4) est choisie une direction faisant un angle, de préférence à peu près un angle droit, avec la direction de sollicitation principale de la garniture de friction pendant le freinage.

7. Procédé selon la revendication 6, **caractérisé par le fait que** dans plusieurs parties contiguës de la surface profilée de la garniture de friction, la première direction (4) est modifiée.

8. Procédé selon l'une des revendications 1 à 7, **caractérisé par le fait qu'**une couche de garniture de friction usée appliquée sur une bande de tôle est usinée par enlèvement de matière jusqu'à une épaisseur restante fixée, de façon telle que la bande de tôle forme avec la couche restante de garniture de friction une structure suffisamment stable mécaniquement pour les étapes suivantes du procédé.

9. Procédé selon l'une des revendications 1 à 8, **caractérisé par le fait que** comme liant (8) est utilisée une matière contenant de la résine phénolique ou du caoutchouc.
